# EUROPÄISCHE PATENTSCHRIFT

(11) **EP 2 419 992 B1**
(45) Veröffentlichungstag und Bekanntmachung des Hinweises auf die Patenterteilung: **27.02.2013**
(21) Anmeldenummer: 09753109.9
(22) Anmeldetag: 17.11.2009
(51) Int. Cl.: H02K 7/18, H02K 7/102, H02K 15/00, F03D 1/00, F03D 7/02, H02K 11/00

(54) **BREMSSYSTEM EINES GENERATORS EINER WINDENERGIEANLAGE**
BRAKING SYSTEM OF A GENERATOR OF A WIND TURBINE
SYSTÈME DE FREINAGE D'UNE GÉNÉRATRICE D'UNE ÉOLIENNE

(30) Priorität: 17.04.2009 DE 102009017531
(43) Veröffentlichungstag der Anmeldung: 22.02.2012
(73) Patentinhaber: Avantis Ltd., Hong Kong (CN)
(72) Erfinder: BODENSTEIN, Klaus, Hong Kong (CN); LANGE, Detlef, 46147 Oberhausen (DE); RUPPRICH, Dieter, 48465 Ohne (DE)
(74) Vertreter: Viering, Jentschura & Partner
(86) Internationale Anmeldenummer: PCT/EP2009/065304
(87) Internationale Veröffentlichungsnummer: WO 2010/118791

(56) Entgegenhaltungen:
- US-A- 4 289 970
- US-A1- 2003 194 310
- US-A1- 2004 075 279
- US-B1- 7 109 600
- US-B1- 7 431 567

## Beschreibung

Die Erfindung richtet sich auf einen Generator für eine Windkraftanlage oder Windenergieanlage mit einem Stator und einem Läufer sowie einer Scheibenbremse, wobei die Scheibenbremse in den Generator integriert ausgebildet ist.

Um einen im Turm einer Windkraftanlage oder Windenergieanlage befindlichen und vom Windrotor angetriebenen Generator gewünschtenfalls anhalten und damit auch den mit den Rotorblättern versehenen Windrotor anhalten zu können, ist der Antriebsstrang mit einer Bremse versehen. Hierbei ist es auch bekannt, eine solche Bremse als Scheibenbremse auszubilden. So ist aus der DE 103 92 908 B4 eine Windenergieanlage bekannt, die in ihrem vom mit den Rotorblättern versehenen Windrotor ausgehenden Antriebsstrang zwischen einem Getriebe und einem Generator eine Kupplung mit integrierter Scheibenbremse aufweist. Eine ebensolche Konstruktion ist auch in der DE 101 19 428 A1 offenbart.

Diese Konstruktionen weisen den Nachteil auf, dass sie aufgrund der vor dem Generator angeordneten Scheibenbremse eine Baulänge aufweisen, die über das für die Bauform des Generators notwendige Maß hinausgehen.

Ein gattungsgemäßer Generator einer Windkraftanlage mit einem Stator und einem Rotor sowie einer in den Generator integrierten Scheibenbremse ist aus der US 7,431,567 B1 bekannt.

Der Erfindung liegt die Aufgabe zugrunde, eine Lösung zu schaffen, die es ermöglicht, eine kompaktere Bauform von Generator und Scheibenbremse sowie eine Erdungsfunktion für den rotierenden Teil der Windkraftanlage zu realisieren.

Bei einem Generator der eingangs bezeichneten Art wird diese Aufgabe erfindungsgemäß dadurch gelöst, dass die Bremsscheibe als elektrische leitender Schleifring ausgebildet und Bestandteil einer galvanischen Verbindung zwischen Stator und Läufer ist.

Dadurch, dass die Scheibenbremse in den Generator integriert ausgebildet ist, wird die Scheibenbremse also in den Bereich und in die Bauform des Generators integriert. Damit wird im Turm einer Windkraftanlage oder Windenergieanlage für die Ausbildung von Generator und Scheibenbremse nur noch ausschließlich der für den Generator notwendige Platz benötigt. Insbesondere bei ohne Zwischenschaltung eines Getriebes funktionsfähigen Windenergieanlagen oder Windkraftanlagen führt dies zu einer kompakteren Bauform, die auch eine entsprechende Verringerung der Außenmaße des Turmgehäuses mit sich bringt.

Bei einer solchen kompakten Ausführung einer aus Elementen des rotierenden Läufers und des feststehenden Stators bestehenden Scheibenbremse lässt sich auf vorteilhafte Weise in die Scheibenbremse und hier insbesondere die Bremsscheibe eine weitere Funktion integrieren. Die als Bestandteil des Läufers ausgebildete Bremsscheibe lässt sich nämlich darüber hinaus für die Erdung und Blitzableitung des rotierenden Teiles der Windenergieanlage nutzen, wenn die Bremsscheibe gleichzeitig als Schleifring dient. Zur Ausbildung einer galvanischen Verbindung zwischen dem stehenden Stator und dem rotierenden Läufer der Windenergieanlage kann eine Kohlebürste als Schleifkontakt vorgesehen sein. Die Erfindung zeichnet sich daher zudem dadurch aus, dass die Bremsscheibe als elektrisch leitender Schleifring ausgebildet und Bestandteil einer galvanischen Verbindung zwischen Stator und Läufer ist.

Hierbei ist es dann erfindungsgemäße weiterhin von Vorteil, wenn am Stator mindestens eine den Schleifring und/oder die Bremsscheibe als Schleifkontakt erfassende Kohlenbürste angeordnet ist. Diese galvanische Verbindung dient gleichzeitig dem Schutz der Hauptlager des Generators vor zerstörerischem Stromdurchgang, da sie einen niederpoligen Bypass darstellt.

Eine besonders zweckmäßige Ausbildung der Scheibenbremse lässt sich hierbei dadurch erreichen, dass die Bremsscheibe der Scheibenbremse innenseitig im Läufer ausgebildet ist. Eine solche Bremsscheibe kann beispielsweise in Kreisringform die Nabe des Läufers umschließen, wobei zur Ausbildung der Scheibenbremse die Bremsscheibe dann mit am Stator ausgebildeten Bremszargen oder Bremsbacken wirkmäßig verbunden ist. In den Bremszargen oder Bremsbacken lässt sich die mit dem Läufer rotierende Bremsscheibe problemlos führen sowie abbremsen und sich dadurch insgesamt eine kompakt ausgebildete Scheibenbremse realisieren. Die Erfindung sieht daher in weiterer Ausgestaltung vor, dass innenseitig am Stator mindestens eine, vorzugsweise mehrere, die Bremsscheibe erfassende Bremszarge(n) oder Bremsbacke(n) angeordnet sind.

Da es möglich ist, den Generator und damit auch den damit verbundenen, die Rotorblätter aufweisenden Windrotor der Windenergieanlage oder Windkraftanlage mit Hilfe der Scheibenbremse gezielt abzubremsen und anzuhalten, ist es ferner wünschenswert, auch eine Möglichkeit vorzusehen, den Generator und den Windrotor in der abgebremsten Position arretieren zu können. Da insbesondere bei getriebelos ausgebildeten Windkraftanlagen und Windenergieanlagen ein stehender Generator aufgrund der starren Verbindung mit dem Windrotor einen ebenfalls stehenden Windrotor bewirkt, besteht eine ebenfalls zu einer kompakten Bauform des Turmgehäuses beitragende Möglichkeit erfindungsgemäß darin, diesen Arretiermechanismus ebenfalls im Generator vorzusehen. In vorteilhafter Ausgestaltung und Weiterbildung der Erfindung wird daher weiterhin vorgeschlagen, dass am Läufer analog zur Anzahl und vorzugsweise zur Position der Windrotorblätter mit vorzugsweise konischen Bohrungen versehene Arretiersegmente angeordnet sind, die mit einem vorzugsweise hydraulisch betätigbaren und vorzugsweise kegelstumpfförmigen, am Stator angeordneten Arretierbolzen in eine den Läufer arretierende Wirkverbindung bringbar sind. Es ist also ohne weiteres möglich, am Stator einen in axialer Richtung des Generators bewegbaren Arretierbolzen vorzusehen, der zur Arretierung des Generators in eine von mehreren in umfangsmäßig innerhalb des Läufers kreisringsegmentförmig ausgebildeten Arretiersegmenten ausgebildete Bohrung eingreift.

Zur Feststellung des Läufers in einer eine weitere Relativbewegung von Läufer und Stator zueinander verhindernden Art und Weise schlägt die Erfindung weiterhin vor, dass je nach Stellung des Läufers der Arretierbolzen in eine der Bohrungen der Arretiersegmente verrastend einführbar ist.

Besonders vorteilhaft ist es, wenn der Läufer ein insbesondere mit Permanentmagneten bestückter Außenläufer ist, da dann der dazu innenliegende Stator sehr gut mit den Bremszargen oder Bremsbacken und der Kohlenbürste ausstattbar ist.

Schließlich ist die die Erfindung insbesondere bei getriebelosen Windkraftanlagen oder Windenergieanlagen anwendbar, so dass die Erfindung ferner vorsieht, dass der Generator Bestandteil eines vielpoligen Synchrongenerators oder Asynchrongenerators ist, dessen Läufer, insbesondere Außenläufer, ohne Zwischenschaltung eines Getriebes mit dem Windrotor der Windkraftanlage oder Windenergieanlage verbunden ist.

Es versteht sich, dass die vorstehend genannten und nachstehend noch zu erläuternden Merkmale nicht nur in der jeweils angegebenen Kombination, sondern auch in anderen Kombinationen oder einzeln verwendbar sind. So kann die Schleifringfunktion einer im Läufer angeordneten Scheibe mit Hilfe einer am Stator angeordneten Kohlebürste realisiert werden, ohne dass gleichzeitig die Scheibe eine mit Bremsbacken oder Bremszargen zusammenwirkende Bremsscheibe zu sein braucht. Ebenso ist es möglich, die Arretierelemente, d.h. die Arretiersegmente und den Arretierbolzen, vorzusehen, ohne dass gleichzeitig die Schleifringfunktion und/oder die Scheibenbremse realisiert sein müssen. Die erfindungsgemäßen Aspekte der Scheibenbremse, des eine galvanische Verbindung ausbildenden Schleifrings sowie des die Arretiersegmente und den Arretierbolzen umfassenden Arretiersystems können jeweils einzeln und ohne die Realisierung eines der jeweils beiden anderen Aspekte der Erfindung, also unabhängig voneinander an einem Generator einer Windkraftanlage oder Windenergieanlage realisiert sein. Der Rahmen der Erfindung ist allerdings nur durch die Ansprüche definiert.

Die Erfindung ist nachstehend anhand einer Zeichnung beispielhaft näher erläutert.

Diese zeigt in
- Fig. 1a: in perspektivischer Darstellung eine Außenansicht eines Stators und eines Außenläufers eines Generators einer Windenergieanlage,
- Fig. 1b: den Stator und den Außenläufer in perspektivischer Darstellung in zur Fig. 1a entgegengesetzten Ansicht,
- Fig. 2: in perspektivischer Darstellung einen Ausschnitt der Bremsscheibe mit einer diese erfassenden Bremsbacke und in

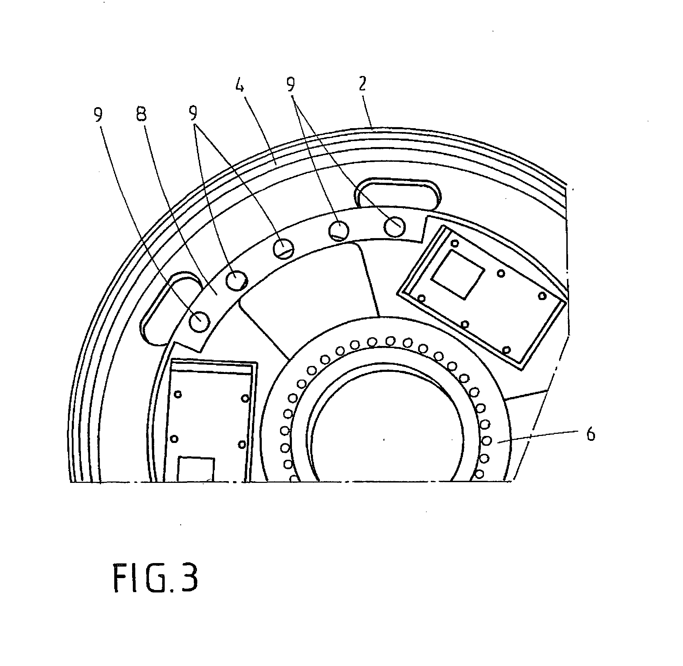

- Fig. 3: eine Sicht auf einen Teilausschnitt der Innenseite eines Läufers mit einem darin angeordneten Arretiersegment.

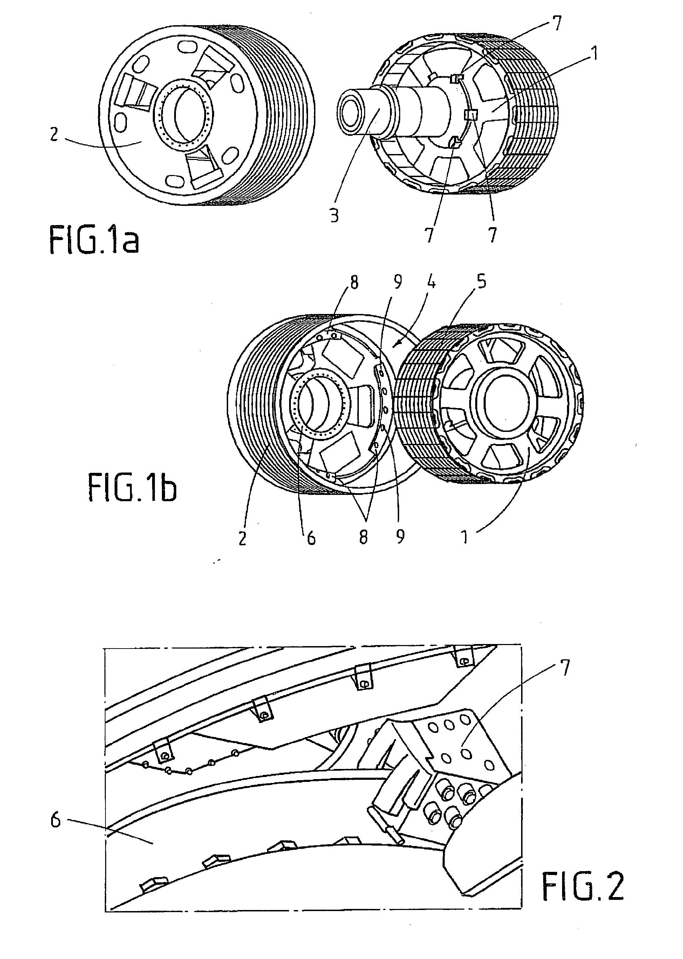

Die Figuren 1a und 1b zeigen einen Stator 1, der zusammen mit einem Außenläufer 2 auf einer gemeinsamen Königswelle oder einer sogenannten "King Tube" 3 montiert den Generator einer Windenergie- oder Windkraftanlage ausbildet. Der Außenläufer 2 weist innenseitig einen aus Permanentmagneten aufgebauten Innenring 4 auf, zu dem das mit Wicklungen versehene Statorblechpaket 5 gegenüberliegend angeordnet ist. Der aus Stator 1 und Außenläufer 2 zusammengesetzte Generator bildet einen vielpoligen Asynchrongenerator oder Synchrongenerator aus, der ohne Zwischenschaltung eines Getriebes vom Windrotor im Turm einer Windkraftanlage oder einer Windenergieanlage angetrieben wird.

In den Generator integriert ist eine aus einer Bremsscheibe 6 und sechs Bremszargen oder Bremsbacken 7 aufgebaute Scheibenbremse ausgebildet. Die Bremsscheibe 6 ist kreisringförmig um die von der "King Tube" 3 getragene Nabe des Außenläufers 2 herum innenseitig im Außenläufer 2 angeordnet. Im zusammengebauten Zustand von Stator 1 und Außenläufer 2 wird die Bremsscheibe 6 von den Backen der Bremsbacken 7 um- und erfasst, wie dies aus der Fig. 2 ersichtlich ist. Die Bremsbacken 7 sind innenseitig am Stator 1 angeordnet, so dass die innenseitig im Außenläufer 2 angeordnete Bremsscheibe 6 und die innenseitig am Stator 1 angeordneten Bremsbacken einander zugewandt innenseitig im Generator geschützt angeordnet sind. Auf diese Weise ist die dadurch gebildete Scheibenbremse in den Generator integriert ausgebildet.

Die Bremsscheibe 6 ist darüber hinaus als elektrisch leitender Schleifring ausgebildet und Bestandteil einer galvanischen Verbindung zwischen dem Stator 1 und dem Außenläufer 2, zu deren Ausbildung am Stator 1 mindestens eine den Schleifring und/oder die Bremsscheibe 6 als Schleifkontakt erfassende Kohlenbürste angeordnet ist, die in den Figuren nicht näher dargestellt ist.

Weiterhin sind innenseitig auf einer zur Bremsscheibe 6 radial beabstandeten Kreisbahn drei Arretiersegmente 8 angeordnet und ausgebildet. Die in Form eines Kreisringsegmentes ausgebildeten Arretiersegmente 8 weisen jeweils fünf konische Bohrungen 9 auf, die mit einem nicht dargestellten, am Stator 1 angeordneten Arretierbolzen mit einer zur Konizität der Bohrungen 9 korrespondierenden kegelstumpfförmigen Außenform in eine den Außenläufer 2 arretierende Wirkverbindung bringbar sind. Hierzu greift der nicht dargestellte Arretierbolzen in eine der konischen Bohrungen 9 ein und arretiert damit den Außenläufer 2 am Stator 1. Da es sich um eine getriebelose Windkraftanlage oder Windenergieanlage handelt, ist damit ebenfalls der starr mit dem Außenläufer 2 und gleichmäßig mit diesem rotierende, die Rotorblätter tragende Windrotor arretiert. Der Außenläufer 2 weist eine der Anzahl der Rotorblätter entsprechende Anzahl und entsprechend der Beabstandung der Rotorblätter zueinander gleichmäßig beabstandete Arretiersegmente 8 auf. Die Arretiersegmente 8 sind somit analog zur Anzahl und zur Position der Windrotorblätter am Außenläufer 2 angeordnet.

In der jeweiligen Bohrung 9, in welche er eingeführt ist, wird der Arretierbolzen verrastet, was vorzugsweise mit Hilfe eines hydraulischen Antriebs geschieht.

Die Scheibenbremse des vorstehend beschriebenen Generators dient zur Abbremsung sowohl des Außenläufers 2 als auch des die Rotorblätter tragenden Windrotors, der mit dem rotierenden Außenläufer 2 wirkmäßig verbunden ist. Mit Hilfe des die Arretiersegmente 8 und den Arretierbolzen umfassenden Arretiersystems lässt sich dann der Windrotor ebenso wie der Außenläufer 2 feststellen, was insbesondere bei der Durchführung von Wartungs- und/oder Montagearbeiten im Turm der Windenergieanlage oder Windkraftanlage zweckmäßig ist. Da die Scheibenbremse zudem als Schleifring für eine einen Schleifkontakt ausbildende Kohlebürste ausgebildet ist, wird dadurch die Erdung des Windrotors und der Rotorblätter bei Blitzschlag sichergestellt.

## Patentansprüche

1. Generator für eine Windkraftanlage mit einem Stator (1) und einem Läufer (2) sowie einer Scheibenbremse, wobei die Scheibenbremse in den Generator integriert ausgebildet ist,
**dadurch gekennzeichnet,**
**dass** die Bremsscheibe (6) als elektrisch leitender Schleifring ausgebildet und Bestandteil einer galvanischen Verbindung zwischen Stator (1) und Läufer (2) ist.

2. Generator nach Anspruch 1, **dadurch gekennzeichnet, dass** am Stator (1) mindestens eine den Schleifring und/oder die Bremsscheibe (6) als Schleifkontakt erfassende Kohlebürste angeordnet ist.

3. Generator nach Anspruch 1 oder 2, **dadurch gekennzeichnet, dass** die Bremsscheibe (6) der Scheibenbremse innenseitig im Läufer (2) ausgebildet ist.

4. Generator nach einem der Ansprüche 1 bis 3, **dadurch gekennzeichnet, dass** innenseitig am Stator (1) mindestens eine, vorzugsweise mehrere, die Bremsscheibe (6) erfassende Bremszarge(n) oder Bremsbacke(n) (7) angeordnet sind.

5. Generator nach einem der vorhergehenden Ansprüche, **dadurch gekennzeichnet, dass** am Läufer (2) analog zur Anzahl und vorzugsweise zur Position der Windrotorblätter mit vorzugsweise konischen Bohrungen (9) versehene Arretiersegmente (8) angeordnet sind, die mit einem vorzugsweise hydraulisch betätigbaren und vorzugsweise kegelstumpfförmigen, am Stator (1) angeordneten Arretierbolzen in eine den Läufer (2) arretierende Wirkverbindung bringbar sind.

6. Generator nach Anspruch 5, **dadurch gekennzeichnet, dass** je nach Stellung des Läufers (2) der Arretierbolzen in eine der Bohrungen (9) der Arretiersegmente (8) verrastend einführbar ist.

7. Generator nach einem der vorhergehenden Ansprüche, **dadurch gekennzeichnet, dass** der Läufer (2) ein insbesondere mit Permanentmagneten bestückter Außenläufer ist.

8. Generator nach einem der vorhergehenden Ansprüche, **dadurch gekennzeichnet, dass** er Bestandteil eines vielpoligen Synchrongenerators oder Asynchrongenerators ist, dessen Läufer (2), insbesondere Außenläufer, ohne Zwischenschaltung eines Getriebes mit dem Windrotor der Windkraftanlage oder Windenergieanlage verbunden ist.

## Claims

1. A generator for a wind power plant including a stator (1) and a rotor (2) as well as a disc brake, wherein said disc brake is formed integrally in said generator,
**characterized in that**:
the brake disc (6) is formed as an electrically conductive slip ring and is a part of a galvanic connection between the stator (1) and the rotor (2).

2. The generator according to claim 1, **characterized in that** at least one carbon brush which engages the slip ring and/or the brake disc as a sliding contact is arranged at the stator (1).

3. The generator according to claim 1 or 2, **characterized in that** the brake disc (6) of the disc brake is formed on the inside within the rotor (2).

4. The generator according to any one of the claims 1 to 3, **characterized in that** at least one, preferably more than one brake calliper(s) or brake shoe(s) (7) engaging the brake disc (6) is/are located on the inside at the stator (1).

5. The generator as claimed in any preceding claim, **characterized in that** locking segments (8) preferably including conical bores (9) are located at the rotor (2) in the same number as wind rotor blades and preferably at identical positions, wherein such locking segments can be brought into an operative connection locking the rotor (2) by a preferably hydraulically operable and preferably frustro-conical locking bolt located on the stator (1).

6. The generator according to claim 5, **characterized in that** depending on the position of the rotor (2) the locking bolt can be inserted lockingly into one of the bores (9) of the locking segments (8).

7. The generator as claimed in any preceding claim, **characterized in that** the rotor (2) is an external rotor equipped with permanent magnets in particular.

8. The generator as claimed in any preceding claim, **characterized in that** the generator is part of a multipole synchronous generator or an asynchronous generator whose rotor (2), in particular external rotor, is connected with the wind rotor of the wind power plant or wind energy plant without interposition of a transmission.

## Revendications

1. Générateur pour une installation éolienne comprenant un stator (1) et un rotor (2) ainsi qu'un frein à disque, dans lequel le frein à disque est réalisé de façon intégrée dans le générateur,
**caractérisé en ce que** le disque de frein (6) est réalisé en tant que bague de frottement électriquement conductrice et fait partie intégrante d'une jonction galvanisée entre le stator (1) et le rotor (2).

2. Générateur selon la revendication 1, **caractérisé en ce qu'**au moins un balai de charbon saisissant la bague de frottement et/ou le disque de frein (6) en tant que contact frottant est agencé sur le stator (1).

3. Générateur selon la revendication 1 ou 2, **caractérisé en ce que** le disque de frein (6) du frein à disque est réalisé du côté intérieur dans le rotor (2).

4. Générateur selon l'une quelconque des revendications 1 à 3, **caractérisé en ce qu'**au moins une, de préférence plusieurs, huisserie(s) de frein ou mâchoire(s) de frein (7) saisissant le disque de frein (6) sont agencées du côté intérieur sur le stator (1).

5. Générateur selon l'une quelconque des revendications précédentes, **caractérisé en ce que** sont agencés sur le rotor (2), d'une manière analogue au nombre et de préférence à la position des pales du rotor de l'éolienne, des segments d'arrêt (8) munis d'alésages de préférence coniques (9) qui peuvent être mis dans une relation fonctionnelle arrêtant le rotor (2) avec un boulon d'arrêt agencé sur le stator (1), pouvant de préférence être actionné hydrauliquement et de préférence de forme tronconique.

6. Générateur selon la revendication 5, **caractérisé en ce qu'**en fonction du positionnement du rotor (2), le boulon d'arrêt peut être introduit en s'enclenchant dans un des alésages (9) des segments d'arrêt (8).

7. Générateur selon l'une quelconque des revendications précédentes, **caractérisé en ce que** le rotor (2) est un rotor externe, en particulier, pourvu d'aimants permanents.

8. Générateur selon l'une quelconque des revendications précédentes, **caractérisé en ce qu'**il fait partie intégrante d'un générateur asynchrone ou d'un générateur synchrone multipolaire dont le rotor (2), en particulier le rotor externe, est relié, sans mécanisme intercalé, avec le rotor de l'installation éolienne ou de l'installation d'énergie éolienne.
